# EUROPEAN PATENT SPECIFICATION

(11) **EP 0 989 347 B1**
(45) Date of publication and mention of the grant of the patent: **28.08.2002**
(21) Application number: 99203121.1
(22) Date of filing: 23.09.1999
(51) Int. Cl.: F16L 5/10

(54) **Sealed feedthrough for a pipe extending through an opening in a liquid-tight lined wall of a reservoir**
Flüssigkeitsdichte Durchführung für ein Rohr durch eine Öffnung in der Askleidungsfolie eines Vorratsbehälters
Traversée étanche du film imperméable aux liquides d'un réservoir par laquelle une conduite pénètre dans le réservoir

(30) Priority: 25.09.1998 NL 1010191
(43) Date of publication of application: 29.03.2000
(73) Proprietor: Genap B.V., 7041 GA 's-Heerenberg (NL)
(72) Inventor: Verschoor, Frederik, 7241 HT Lochem (NL)
(74) Representative: Ottevangers, Sietse Ulbe

(56) References cited:
- DE-C- 3 623 550
- GB-A- 930 921
- GB-A- 2 224 090

## Description

The invention relates to a lead-through for liquid-tightly sealing an opening in a liquid-tight film wall of a reservoir, through which opening extends a pipe terminating in the reservoir, the lead-through comprising a plate from film material in which an opening is included, the lead-through also comprising a sleeve from film material having its first end connected to the plate by means of a circumferential weld, such that the opening in the plate terminates in the sleeve.

For rendering storage basins, storage tanks and like reservoirs liquid-tight, a liquid-tight film is often used. For supplying and discharging the stored liquid, pipelines are often passed through the dike or bottom of the basin or through the bottom or lateral wall of the tank. Hence, for such a pipe, an opening should be provided in the film wall of the reservoir. To prevent leakage of liquid from the reservoir through the gap bounded by the opening in the film wall and the pipe extending through the opening, a lead-through as described hereinabove has hitherto been employed. The plate of the lead-through was connected to the film wall of the reservoir by means of a weld, while the sleeve of the lead-through was slid over the pipe. Next, by means of a clamping strip or a bandage, the sleeve was fixedly pressed against the circumference of the pipe to establish a liquid-tight connection between the sleeve of the lead-through and the pipe.

A drawback of the known lead-through is that for each diameter of the pipe, a separate lead-through is necessary. After all, the diameter of the sleeve of the lead-through should be adjusted to the outer diameter of the pipe to be led through. Moreover, in view of the required tolerances, the diameter of the sleeve should always be chosen to be slightly greater than the diameter of the pipe. This has the drawback that the attachment of the sleeve on the pipe involves wrinkling. Precisely these wrinkles entail a great risk of leaking. Another drawback of the known lead-through is that it should be accurately adjusted to the angle between the center line of the pipe and the plane of the wall through which the pipe extends. Usually, this angle is 90° or 45°. Hence, for the different angles, different lead-throughs should be provided, to prevent excessive wrinkle formation in the sleeve during placement of the lead-through.

The object of the invention is to provide a lead-through of the type mentioned in the preamble, without the above-described drawbacks. To this end, the lead-through according to the invention is characterized in that the sleeve, viewed from the first end, tapers off towards a second end, the sleeve being manufactured from material capable of being cut and/or trimmed, so that the lead-through is applicable to pipes of different diameters by cutting off or trimming the conical sleeve in a position fitting a relevant pipe diameter.

Such a sleeve, which may be designed as a truncated cone, can be pulled around the pipe until the sleeve "gets stuck". Next, the sleeve can be cut off at the free end of the pipe. After cutting, the sleeve can be slid slightly further over the pipe and subsequently connected to the pipe by means of a clamping strip or bandage. This results in a perfectly fitting connection between the sleeve and the pipe. For the various diameters only one lead-through needs to be designed. Moreover, no wrinkles are formed at the end of the sleeve during its attachment on the pipe. Moreover, the lead-through is suitable for a wide range of angles at which the pipe extends through the wall of the reservoir. An additional advantage of the fact that both the plate and the sleeve are manufactured from film material is that for this, the same film material can be selected as the film material with which the wall of the reservoir is covered. Thus, a welded connection between the plate of the lead-through and the film wall of the reservoir can readily be established.

Another advantage of the lead-through according to the invention is that it can be nested, so that the required storage space for a given number of lead-throughs is considerably smaller than the storage space required for the same number of circular-cylindrical lead-throughs.

In accordance with a further elaboration of the invention, it is particularly favorable when the outer surface of the sleeve extends in an imaginary cone whose apex angle is within the range of about 5°-60°.

With such conicity, a considerable diameter range is achieved, while, as the sleeve gets stuck during placement of the lead-through, there is nevertheless created between the sleeve and the pipe a contact surface long enough to enable the creation of a sufficient seal between the sleeve and the pipe.

The invention also relates to a reservoir comprising a liquid-tight wall from film material, with an opening provided in the wall through which extends a pipe terminating in the reservoir, the annular gap bounded by the opening in the wall and the pipe being sealed by means of a lead-through according to the invention.

The invention further relates to a method for placing a lead-through according to the invention, wherein the lead-through is slid over a free end of a pipe extending into a reservoir until the sleeve, due to its conicity, gets stuck, the sleeve being subsequently cut off adjacent the free end of the pipe, the sleeve being subsequently slid further onto the pipe, to cause some wrinkle formation in circumferential direction of the sleeve, the second end of the sleeve being subsequently liquid-tightly connected to the pipe by means of a clamping strip or bandage and the plate being connected to the liquid-tight film wall of the reservoir.

Due to the fact that between the first and the second end of the sleeve in mounted condition thereof, wrinkles are located that extend in circumferential direction, displacements of the pipe relative to the wall through which the pipe extends, for instance due to settling or warping, can be taken up without causing damage to the lead-through. Moreover, in that manner, there is created sufficient space in the film material of the sleeve to bear against the pipe when the reservoir is being filled with liquid, without involving stresses in the film material. It is observed that in some cases, the film wall and the different lead-throughs are prefabricated in the factory. Under those circumstances, the connection between the plate of each lead-through and the film wall has obviously already been established before the sleeve is being cut to its proper size, so that this method step of connecting the plate of the lead-through to the film wall need no longer be carried out under those circumstances. In fact, during the prefabrication of film walls having one lead-through, and in particular having a number of lead-throughs, it is of a particular advantage that the lead-throughs have a conical sleeve. Indeed, the positional accuracy of conical lead-throughs is far less critical than the positional accuracy required for lead-throughs having a circular-cylindrical sleeve. Thus, in conical lead-throughs which have already been connected to the film wall in a prefabricating process, various inaccuracies and dimensional changes of a film wall, for instance caused by shrinkage, can readily be taken up.

It is observed that GB-930 921 discloses a lead-through for a chimney or vent pipe extending through a sloping roof. This known lead-through is likewise provided with a plate and a conical sleeve. However, the sleeve has its free end provided with a sealing ring serving for a watertight connection between the sleeve and the pipe to be led through. This sealing ring cannot be removed, because that would cause said watertight connection to be lost. Hence, the known lead-through is only suitable for cooperation with pipes having one specific diameter. Each pipe diameter requires the manufacture of a lead-through especially intended therefor. This is precisely the problem to which the present invention provides the solution.

Hereinafter, the invention will be specified on the basis of an exemplary embodiment with reference to the accompanying drawings.
Fig. 1 is a sectional view of a portion of a reservoir at the location of a pipe;
Fig. 2 is a front view of a lead-through according to the invention; and
Fig. 3 is a right-hand side elevation of the front view given in Fig. 2.

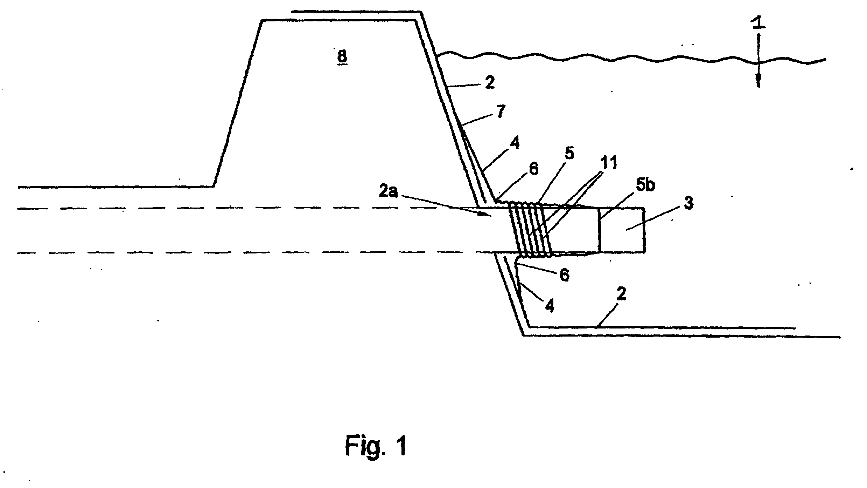

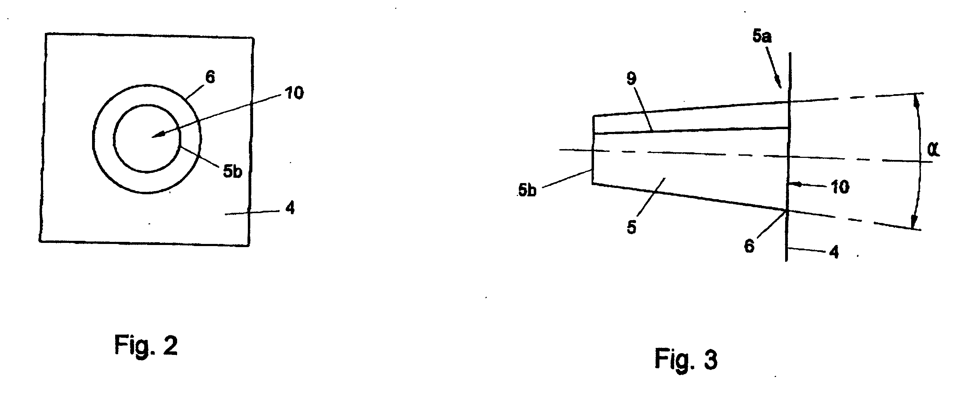

Fig. 1 is a sectional view of a storage basin 1 bounded by a dike 8. The walls of the reservoir designed as storage basin 1 are covered with a liquid-tight film 2. Provided in the film 2 is an opening 2a through which a pipe 3 extends. The pipe 3 is intended for feeding liquid to and/or from the reservoir 1. To effect a proper seal of the opening 2a in the film wall 2, a lead-through has been placed over the pipe 3. This lead-through, shown in detail in Figs. 2 and 3, comprises a plate 4 and a sleeve 5, each manufactured from film material. The sleeve 5 has its first end 5a connected to the plate 4 via a weld seam 6. Within the weld seam 6, an opening 10 has been provided in the plate 4. Preferably, this opening 10 is bounded by the weld seam 6. The free end of the sleeve 5 forms a second end 5b. Viewed from the first end 5a to the second end 5b, the sleeve 5 tapers off. The imaginary cone in which the outer surface of the sleeve 5 extends has an apex angle α. Preferably, this apex angle α is in the range of about 5°-60°. At such angles, a pipe diameter range of about 30-350 mm can be covered by means of three different lead-throughs.

For placing the lead-through, the lead-through is slid over the pipe 3 until the sleeve 5 gets stuck due to its conicity. Next, the part of the sleeve 5 that extends beyond the free end of the pipe 3 can be cut off, so that the outflow opening of the pipe 3 remains clear. After that, the sleeve 5 can be slid further over the pipe 3, so that adjacent the plate 4, some wrinkles 11 extending in circumferential direction are formed in the sleeve 5. Next, by means of, for instance, a clamping strip or adhesive bandage, the sleeve 5 can be connected to the pipe 3 to establish a liquid-tight connection between the sleeve 5 and the pipe 3, without involving wrinkle formation adjacent the second end 5b of the sleeve 5. Further, by means of a weld connection, a liquid-tight connection can be effected between the plate 4 and the film wall 2. Thus, a liquid-tight seal of the opening 2a, provided in the film 2 for the pipe 3, has been realized. Due to the fact that the sleeve 5 is conical, the lead-through is suitable for use with pipes 3 of different diameters. Moreover, due to its conicity, the lead-through is also suitable for pipes 3 intersecting the wall of the reservoir 1 at different angles. Indeed, due to the conicity of the sleeve 5, a wrinkle-free connection can in each case be created between the second end 5b of the sleeve 5 and the pipe 3. Because of the space created by the wrinkles 11 in the sleeve 5 that extend in circumferential direction, the plate 4, connected to the film wall 2, may undergo some displacement without causing damage to the lead-through. Such displacement occurs, for instance, as a result of warping in the wall through which the pipe 3 extends. Moreover, the circumferentially extending wrinkles 11 provide the required space to enable the sleeve 5 to bear against the pipe 3 without involving stress in the film material of the sleeve 5 and/or the plate 4.

As indicated in Fig. 3, the sleeve 5 is manufactured from a substantially trapezoidal sheet of film, the non-parallel longitudinal edges of which are interconnected by means of a weld seam 9. However, it is understood that the sleeve 5 may also be built up from a number of sections. If so desired, the plate 4 may also have another shape instead of rectangular, such as, for instance, ellipsoidal or circular. Moreover, the opening 10 may be ellipsoidal or polygonal, such as rectangular or hexagonal, rather than circular. Also, the contour of the sleeve at the location of the opening may be ellipsoidal or polygonal, such as rectangular or hexagonal, rather than circular. Hence, the term "circumferential weld" as used hereinabove does not mean "circular" but "closed in itself" or "endless".

## Claims

1. A lead-through for liquid-tightly sealing an opening (2a) in a liquid-tight film wall (2) of a reservoir (1), through which opening (2a) extends a pipe (3) terminating in the reservoir (1), the lead-through comprising a plate (4) from film material in which an opening (10) is included, the lead-through also comprising a sleeve (5) from film material having a first end (5a) thereof connected to the plate (4) by means of a circumferential weld (6), such that the opening (10) in the plate (4) terminates in the sleeve (5), **characterized in that** the sleeve (5), viewed from the first end (5a), tapers off towards a second end (5b), the sleeve (5) being manufactured from material capable of being cut and/or trimmed, so that the lead-through is applicable to pipes (3) of different diameters by cutting off or trimming the conical sleeve (5) in a position fitting a relevant pipe diameter.

2. A lead-through according to claim 1, **characterized in that** the outer surface of the sleeve (5) extends in an imaginary cone whose apex angle (α) lies in the range of about 5°-60°.

3. A reservoir (1) comprising a liquid-tight wall (2) from film material, with an opening (2a) provided in the wall (2) through which extends a pipe (3) terminating in the reservoir (1), an annular gap bounded by the opening (2a) in the wall (2) and the pipe (3) being sealed by means of a lead-through according to claim 1 or 2.

4. A method for placing a lead-through according to claim 1 or 2, **characterized in that** the lead-through is slid onto a free end of a pipe (3) extending into a reservoir (1), until the sleeve (5), due to the conicity thereof, gets stuck, the sleeve (5) subsequently being cut off adjacent the free end of the pipe (3), the sleeve (5) subsequently being slid further onto the pipe (3) to cause some wrinkle formation (11) in circumferential direction of the sleeve (5), the second end (5b) of the sleeve (5) being subsequently liquid-tightly connected to the pipe (3) by means of a clamping strip or bandage, and the plate (4) being connected to the liquid-tight film wall (2) of the reservoir (1).

## Patentansprüche

1. Durchführung zum flüssigkeitsdichten Abdichten einer Öffnung (2a) in einer flüssigkeitsdichten Folienwand (2) eines Behälters (1), wobei sich ein in den Behälter (1) mündendes Rohr (3) durch die Öffnung (2a) erstreckt, wobei die Durchführung eine Platte (4) aus Folienmaterial aufweist, welche mit einer Öffnung (10) versehen ist, wobei die Durchführung ferner eine Hülse (5) aus Folienmaterial aufweist, deren erstes Ende durch eine Umfangsschweißung (6) mit der Platte (4) derart verbunden ist, daß die Öffnung (10) in der Platte (4) in der Hülse (5) endet, **dadurch gekennzeichnet, daß** die Hülse (5), vom ersten Ende (5a) gesehen, sich in Richtung des zweiten Endes (5b) verjüngt, wobei die Hülse (5) aus einem schneid- und/oderzuschneidbaren Material hergestellt ist, so daß die Durchführung für Rohre (3) verschiedener Durchmesser verwendbar ist, indem die konische Hülse (5) an einer Stelle abgeschnitten oder zugeschnitten wird, die für den jeweiligen Rohrdurchmesser passend ist.

2. Durchführung nach Anspruch 1, **dadurch gekennzeichnet, daß** die Außenfläche der Hülse (5) sich in einem imaginären Kegel erstreckt, dessen Scheitelwinkel (α) im Bereich zwischen ungefähr 5° und 60° liegt.

3. Behälter (1) mit einer flüsslgkeitsdichten Wand (2) aus Folienmaterial, mit einer in der Wand (2) ausgebildeten Öffnung (2a), durch welche sich ein Rohr (3) erstreckt, das im Behälter (1) endet, wobei ein Ringspalt, der von der Öffnung (2a) in der Wand (2) und dem Rohr (3) begrenzt ist, durch eine Durchführung nach Anspruch 1 oder 2 abgedichtet ist.

4. Verfahren zum Anbringen einer Durchführung nach Anspruch 1 oder 2, **dadurch gekennzeichnet, daß** die Durchführung auf ein freies Ende eines sich in einen Behälter (1) erstreckenden Rohres (1) geschoben wird, bis die Hülse (5) aufgrund ihrer Konizität steckenbleibt, wobei die Hülse (5) anschließend nahe dem freien Ende des Rohres (3) abgeschnitten wird, wobei die Hülse (5) anschließend weiter auf das Rohr (3) aufgeschoben wird, um eine gewisse Faltenbildung (11) in Umfangsrichtung der Hülse (5) zu bewirken, wobei das zweite Ende (5b) des Rohres (5) anschließend flüssigkeitsdicht mit dem Rohr (3) durch ein Klemmband oder eine Bandage verbunden wird und die Platte (4) mit der flüssigkeitsdichten Folienwand (2) des Behälters (1) verbunden wird.

## Revendications

1. Traversée destinée à fermer de manière étanche aux liquides une ouverture (2a) d'une paroi (2) à film étanche aux liquides d'un réservoir (1), un tube (3) s'étendant dans l'ouverture (2a) et aboutissant dans le réservoir (1), la traversée comportant une plaque (4) d'un matériau du film dans lequel est incluse une ouverture (10), la traversée comprenant aussi un manchon (5) du matériau du film ayant une première extrémité (5a) raccordée à la plaque (4) par une soudure circonférentielle (6), si bien que l'ouverture (10) formée dans la plaque (4) se termine dans le manchon (5),
**caractérisée en ce que** le manchon (5), vu depuis la première extrémité (5a), a une dimension qui varie progressivement vers une seconde extrémité (5b), le manchon (5) étant formé d'un matériau qui peut être coupé et/ou ébavuré, si bien que la traversée peut être appliquée à des tubes (3) de diamètres différents par découpe ou ébavurage du manchon conique (5) en position d'ajustement au diamètre du tube concerné.

2. Traversée selon la revendication 1, **caractérisée en ce que** la surface externe du manchon (5) s'étend sous forme d'un cône imaginaire dont l'angle sommet (α) est compris dans la plage allant d'environ 5 à 60°.

3. Réservoir (1) comprenant une paroi étanche aux liquides (2) d'un matériau de film, avec une ouverture (2a) formée dans la paroi (2) destinée au passage d'un tube (3) qui aboutit dans le réservoir (1), un espace annulaire délimité par l'ouverture (2a) dans la paroi (2) et le tube (3) coopérant de façon étanche à l'aide d'une traversée selon la revendication 1 ou 2.

4. Procédé de disposition d'une traversée selon la revendication 1 ou 2, **caractérisé en ce que** la traversée est glissée sur une extrémité libre d'un tube (3) qui s'étend dans un réservoir (1) jusqu'à ce que le manchon (5), du fait de sa conicité, soit coincé, le manchon (5) étant ensuite coupé près de l'extrémité libre du tube (3), le manchon (5) étant ensuite glissé plus loin sur le tube (3) pour créer une forme plissée (11) dans la direction circonférentielle du manchon (5), la seconde extrémité (5b) du manchon (5) étant raccordée ensuite de façon pratiquement étanche aux liquides au tube (3) par un bandage ou une bande de serrage, et la plaque (4) étant raccordée à la paroi de film êtanche aux liquides (2) du réservoir (1).
